# EUROPÄISCHE PATENTANMELDUNG

(11) **EP 1 286 375 A2**
(43) Veröffentlichungstag der Anmeldung: **26.02.2003**
(21) Anmeldenummer: 02015216.1
(22) Anmeldetag: 09.07.2002
(51) Int. Cl.: H01H 85/00

(54) **Elektrischer T-Stecker**

(30) Priorität: 20.08.2001 DE 10140762
(71) Anmelder: EFEN GmbH, 65344 Eltville (DE); Felten & Guilleaume Kabelgarnituren GmbH, 26954 Nordenham (DE)
(72) Erfinder: Merks, Jochen, 26919 Brake Utw. (DE); Storzer, Hans Dieter, Dr.-Ing., 59348 Lüdinghausen (DE); Hesse, Martin, 65388 Schlangenbad (DE)
(74) Vertreter: Weber, Dieter, Dr.

(57) **Zusammenfassung**

Beschrieben wird ein elektrischer T-Stecker für den Anschluß an Hochspannungsleitungen und insbesondere in Schaltanlagen. In einem elektrisch isolierenden Steckerkörper (1) ist - von diesem überdeckt - eine Sicherung (3) angeordnet.

Damit auch unter beengten Bedingungen und unabhängig von dem Abkoppeln von Energie auch während der Möglichkeit einer Energieübertragung Daten mit hoher Frequenz ein- oder ausgekoppelt werden können, sieht die Erfindung vor, daß in Reihe zu der Sicherung (3) ein Koppelkondensator (16) geschaltet ist, der ebenfalls von dem isolierenden Steckerkörper (1) überdeckt ist.

## Beschreibung

Die Erfindung betrifft einen elektrischen T-Stecker für den Anschluß an Hochspannungsleitungen, insbesondere in Schaltanlagen, wobei in einem elektrisch isolierenden Steckerkörper, von diesem überdeckt, eine Sicherung angeordnet ist.

Bekannt ist eine Hochspannungs-Hochleistungs-(HH-)Sicherung für eine Kabelleitung zwischen einem Transformator und einer Schaltanlage, wobei in einem elektrisch isolierenden Steckerkörper in Form eines T-Steckers oder Winkelsteckers eine Sicherung mit Anschlußelement untergebracht ist. Bei dem bekannten T-Stecker werden die radialen Abmessungen handelsüblicher Kabelgarnituren nicht überschritten und Teilentladungen auf zulässige Größe begrenzt. Hierfür wird der elektrisch isolierende Steckerkörper als einteiliges, ungebrochenes Isolierrohr ausgestaltet. Durch einen Feldsteuerkörper gilt der bekannte Stecker als teilentladungsfrei.

Durch die Unterbringung der Sicherung in dem T-Stecker ist es möglich, mit einem Gerät kompakter Bauform Energie aus elektrischen Leitungen abzunehmen oder auch umgekehrt einzukoppeln.

Andererseits ist die "Power-Line-Technik" bekannt, mit deren Hilfe in immer günstigerem Maße das Problem gelöst wird, Daten und Signale über das vorhandene Energienetz zu senden. Hierbei kann es sich auch um Fernsehbilder, Telefongespräche, Internetdaten oder Zählerfernauslesedaten handeln. Bei diesen Anwendungen geht es um die Übertragung hochfrequenter Signalströme über das für die 50 Hz Energieverteilung installierte Netz. Man weiß, daß die Energie- und die Datenspannung jeweils durch Koppelkondensatoren getrennt werden, über die man Datenströme in das Energienetz ein- und auskoppeln kann.

Bekannte Ankoppelschaltungen für Datenübertragungseinrichtungen sind dabei an Mittelspannungsnetze angeschlossen, um einerseits das Energieübertragungsnetz betriebsfähig zu halten und andererseits dem Wartungspersonal und anderen Personen einen besonderen Schutz zu geben. Dafür hat man bereits eine Reihenschaltung aus einem Koppelkondensator mit vorgeschalteter Feinsicherung geschaffen. Mit einer solchen Ankoppelschaltung können zwar hochfrequente Signalströme ausgekoppelt werden, es ist aber nicht möglich gleichzeitig Energie aus dem Netz abzukoppeln.

Aufgabe der Erfindung ist es daher, einen elektrischen T-Stecker der eingangs genannten Art so weiterzuentwickeln, daß auch unter beengten Bedingungen und unabhängig von dem Abkoppeln von Energie, gleichwohl auch während der Möglichkeit einer Energieübertragung Daten mit hoher Frequenz ein- oder ausgekoppelt werden können.

Bei einem elektrischen T-Stecker der eingangs genannten Art wird diese Aufgabe erfindungsgemäß dadurch gelöst, daß in Reihe zu der Sicherung ein Koppelkondensator geschaltet ist, der ebenfalls von dem isolierenden Steckerkörper überdeckt ist. Erfindungsgemäß wird ein T-Stecker oder ein Winkelstecker geschaffen, der als mobiler separater Stecker insbesondere in Schaltanlagen an Hochspannungsleitungen angeschlossen werden kann und störungsfrei das Ein- bzw. Auskoppeln von hochfrequenten Datenströmen erlaubt. Der Begriff T-Stecker ist hier als übergeordneter Begriff zu verstehen und schließt somit auch Winkelstecker ein. Das Personal kann den erfindungsgemäßen Steckerkörper aus dem elektrisch isolierenden Material in die Hand nehmen und in der Schaltanlage auch bei beengtem Raum anschließen. In dem quergehenden Teil des Steckerkörpers ist bei einem Winkelstecker nur ein Anschlußelement auf nur einer Seite für diesen Anschluß vorgesehen. Ein T-Stecker bedeutet die Anschlußmöglichkeit auf beiden Seiten des quergehenden Steckerkörperteils. Von beiden Seiten können dann hochfrequente und/oder niederfrequente Ströme übertragen werden. Zur Vereinfachung werden hier T-Stecker beschrieben. Die isolierende Umhüllung ist als Steckerkörper ausgebildet und erlaubt eine kompakte Ausgestaltung des T-Steckers.

Durch die Mobilität des neuen T-Steckers können in bereits im Betrieb befindlichen und älteren Schaltanlagen auf engem Raum sichere, zusätzliche Anschlüsse geschaffen werden. In vielen älteren Schaltanlagen sind nur drei Anschlußfelder vorgesehen. Bei neueren Schaltanlagen wird für die Power-Line-Ankopplung ein zusätzliches viertes Anschlußfeld eingebaut. Durch den Stecker gemäß der Erfindung ist ein Anschluß an die Energieleitungen, insbesondere Anschluß für die Power-Line-Ankopplung auch möglich, wenn nur drei Anschlußfelder vorgesehen waren. Der neue T-Stecker erlaubt nicht nur eine kompakte Bauweise und praktische Handhabung, sondern durch seine Reihenschaltung in dem übergreifenden Steckergehäuse die Unterbringung elektrischer Bauelemente mit guten Hochfrequenzeigenschaften.

Den neuen T-Stecker kann man mit dem rückseitigen Anschluß der bekannten T-Stecker, die nur dem Abgriff und der Übertragung von Energie dienen, verbinden, so daß nun auch eine Datenankopplung bei metallgekapselten oder isoliergekapselten Schaltanlagen mit Hochspannungsleitungen möglich ist.

Bevorzugt ist es dabei, wenn erfindungsgemäß der Koppelkondensator ein keramischer Scheibenkondensator ist. Es sind bereits induktivitätsarme Scheibenkondensatoren an sich bekannt. Bei solchen Kondensatoren kann sich konstruktionsbedingt innerhalb des Dielektrikums eine hohe Feldstärke ausbilden mit einer nachteilig hohen Fehlerwahrscheinlichkeit. Dieser Nachteil eines elektrischen Ausfalles einer solchen Reihenschaltung kann beispielsweise durch mehrere redundante Komponenten weitgehend kompensiert werden. Es muß sichergestellt werden, daß durch einen Isolationsdurchschlag des Kondensators kein Kurzchluß des angeschlossenen Spannungsnetzes auftritt. Dies kann beispielsweise durch Verwendung einer kurzschlußstrombegrenzenden Schmelzsicherung verhindert werden. Wenn nun die zwei endseitigen Anschlußkontakte durch eine Reihenschaltung gemäß der Erfindung verbunden sind, bei der zum Beispiel die Sicherung teilweise als Schmelzleiter ausgebildet ist, dann kann bei einem Spannungsdurchschlag ein Netzkurzschluß mit den nachteiligen Folgen vermieden werden. Bei einem Spannungsdurchschlag wird die Wärmeentwicklung im Schmelzleiter so groß, daß dieser durchschmilzt, wodurch die Reihenschaltung gemäß der Erfindung sofort vom Netz getrennt wird. Der isolierende Steckerkörper kann vorzugsweise als Sicherungsgehäuse in Form eines als Hohlköper ausgebildeten Isolators ausgestaltet sein. Das Sicherungsgehäuse kann man zum Beispiel aus Porzellan, Gießharz, Epoxidharz oder Keramik herstellen. Der Koppelkondensator befindet sich im Steckerkörper, d.h. in dem Sicherungsgehäuse, so daß für Schmelzleiter, d.h. für die Sicherung, kein zweites Gehäuse benötigt wird. Störende Verbindungsleitungen zwischen Sicherung und Koppelkondensator können somit auf ein Mindestmaß beschränkt werden.

Die Ausgestaltung als Scheibenkondensator sieht vorzugsweise ein einschichtiges Dielektrikum vor. Hier kommen vorzugsweise Keramikkondensatoren zum Einsatz, bei denen als Dielektrikum eine Keramik verwendet wird. Der Scheibenkondensator weist eine sehr geringe Eigeninduktivität auf. Zwar ist durch Verwendung des Scheibenkondensators die Gefahr eines Spannungsdurchschlages deutlich erhöht, dessen negative Folgen werden jedoch durch das Vorhandensein der Sicherung stark eingeschränkt. Der isolierende Steckerkörper ist zusätzlich mit feinem Quarzsand gefüllt, um eine Lichtbogenausbildung in der durchgeschmolzenen Sicherung zu unterbinden. Aus diesem Grunde kann man auch den Steckerkörper oder das Gehäuse der Sicherung mit feinem Quarzsand oder ähnlich gleichwirkenden Materialien füllen.

Mit dem T-Stecker gemäß der Erfindung ist es auf einfache und kostengünstige Weise möglich, Hochspannungskreise effektiv zu überwachen. Durch die Erfindung ist ferner eine besonders günstige Anwendung möglich, weil man Fehler von Kabeln abnehmen und feststellen kann. Wenn also zum Beispiel ein Übertragungskabel innere Entladungen hat, die von einem inneren Fehler herrühren, dann entstehen hochfrequente Störsignale. Bei der Datenübertragung stören solche Signale und müssen herausgefiltert werden. Parallel dazu kann man nun mit den erfindungsgemäßen Maßnahmen im Hinblick auf den Zustand des Übertragungskabels diese Störsignale auswerten.

Der Aufbau einer solchen zweckmäßigen Anwendung läßt sich so beschreiben, daß ein Verstärker die Spannung über einen Widerstand abgreift und das Signal einem Filter zuführt. Letzterem ist ein A/D-Wandler und diesem wiederum ein PC nachgeschaltet.

Bei vorteilhafter weiterer Ausgestaltung der Erfindung hat der Koppelkondensator zylindrische Bauform. Die zylindrische Gestalt erlaubt eine kompakte Bauweise, die auch kabeltechnisch konform ist, so daß gut eine Anpassung an handelsübliche Kabelgarnituren und deren verfügbare Anschlußabmessungen möglich ist. Das Gehäuse und gegebenenfalls auch der Steckerkörper können entsprechend kompakt mit kabeltechnisch konformer Gestaltung aufgebaut sein. Das ist günstig für die platzsparende Unterbringung an Schaltanlagen und dergleichen. Die Beschichtung zylindrischer Gehäuse oder auch des zylindrischen Steckerkörpers ist dann ebenfalls günstig. Mit weiterem Vorteil wird das Volumen in solchen Körpern optimal genutzt, und auch die Feldverteilung wird optimiert.

Bei einer bevorzugten Ausführungsform der Erfindung ist das Gehäuse des Koppelkondensators und/oder des isolierenden Steckerkörpers elastisch. Dann wird nämlich mit Vorteil ein gleichmäßiger Anpreßdruck auf die zylindrische Mantelfläche des Koppelkondensators ausgeübt. Außerdem ist es erfindungsgemäß günstig, wenn auch die Sicherung eine zylindrische Bauform hat, weil damit äußere Überschläge besser vermieden werden.

Die Erfindung ist zweckmäßig weiter dadurch ausgestaltet, daß auf der äußeren Fläche des isolierenden Steckerkörpers eine leitfähige Beschichtung vorgesehen ist. Diese Beschichtung kann geerdet sein. Die Beschichtung dient dann dem Berührungsschutz mit dem weiteren Vorteil, daß der neue Stecker mit größerer Sicherheit dem Personal zugänglich ist. Anderenfalls sind weitere Vorsichtsmaßnahmen zweckmäßig, wie Gitter oder Gehäuse außen um die Bauelemente herum.

Die zylindrische Bauform ist weiterhin mit dem Vorteil verbunden, daß man die ganze leitfähige Beschichtung als Schlauch herstellt und über den Steckerkörper und/oder den Koppelkondensator aufbringen kann. Leitfähige Beschichtungen können auch auf einem Elastomerschlauch und einstückig mit diesem verarbeitet werden. Solche Schläuche lassen sich nicht nur praktisch herstellen, sondern auch günstig handhaben, montieren und in einem Sicherungsaufbau einbringen.

Weitere Vorteile in Verbindung mit der kompakten Bauweise bestehen auch darin, daß man erfindungsgemäß die elektrischen Bauelemente oder auch den isolierenden Steckerkörper mit einheitlichem Außendurchmesser auswählt. Auf diese Weise hat die Außenkontur eines solchen Steckers keine Abstufungen mit den Möglichkeiten einer Anpassung an Kabel mit verschiedenen Leiterquerschnitten und -durchmessern und damit Voraussetzungen für eine universelle Anwendbarkeit und vielseitigen Einsatz.

Zweckmäßig ist es gemäß der Erfindung ferner, wenn in Reihe zu der Sicherung und dem Koppelkondensator eine Anpaßeinrichtung geschaltet ist. Wenn der Koppelkondensator defekt ist, schaltet die in Reihe verbundene Sicherung im Sinne einer Vorsicherung mit hohem Schaltvermögen. Man kann die Reihenschaltung als HF-Koppler betrachten, dem die Anpaßeinrichtung nachgeschaltet ist, so daß die gesamte Einheit wie ein Anschlußmodul wirkt und an ein Modem anschließbar ist. Zur galvanischen Trennung von dem Modem ist in der Anpaßeinrichtung ein mit dem Koppelkondensator verbundener Übertrager - sowie auf der Modemseite ein Überspannungsschutz - vorgesehen. Der Hersteller einer solchen Schaltung kann die Elemente kompakt und preiswert zusammenfassen, elektrisch verbinden und befestigen, so daß das Anschlußmodul in Serie herstellbar ist und unter Gewährleistung jeglicher Sicherheit montierbar ist. Der Überspannungsschutz auf der Modemseite der Anpaßeinrichtung sorgt mit weiterem Vorteil dafür, daß das Modem gegen Überspannungen gesichert ist, die zum Beispiel bei Blitzoder Schaltüberspannungen aus dem Netz kommen. Die Datenströme können aus dem Netz nicht nur ausgekoppelt, sondern mit dem erfindungsgemäßen T-Stecker auch eingekoppelt werden.

Es ist weiterhin vorteilhaft, wenn erfindungsgemäß in der Reihenschaltung die Sicherung auf der Erdseite des Koppelkondensators angeschlossen ist. Zwar könnte man zur Begrenzung von Teilentladungen innerhalb des isolierenden Steckerkörpers eine feldsteuernde Schicht, die zum Beispiel aus halbleitendem Material hergestellt sein kann, anordnen, um eine ausreichende Feldabschirmung zum Beispiel der intakten Schmelzleiter vorzusehen. Diese feldsteuernde Schicht würde auch während und nach dem Abschalten der Sicherung eine Isolierung zwischen den Kontaktkappen bieten, die sich an den Enden der Sicherung befinden. Ist aber gemäß dem vorliegenden Vorschlag die Sicherung auf der Erdseite des Koppelkondensators angeschlossen, dann liegt die Sicherung auf Erdpotential und glimmt nicht, d.h. sie ruft keine Teilentladungen hervor.

Die Erfindung ist bei einer Ausführungsform bevorzugt dadurch gekennzeichnet, daß der Koppelkondensator und die Sicherung einen gemeinsamen zylindrischen Körper mit etwa gleichem Außendurchmesser bilden. Es wurde oben schon auf die Vorteile in Verbindung mit einer solchen zylindrischen Bauform hingewiesen, zum Beispiel die kompakte Bauweise und die gute Anpaßmöglichkeit an handelsübliche Kabelgarnituren und die bei diesen verfügbaren Anschlußabmessungen. Das Bilden eines gemeinsamen zylindrischen Körpers erlaubt die Herstellung eines einteiligen, ungebrochenen Steckerkörpers. Damit wird jede elektrische Fuge, jede Schwachstelle vermieden, und dennoch kann man die Dicke der isolierenden Materialien geringer halten.

Diese und die anderen oben erwähnten Vorteile erreicht man für die gesamte Reihenschaltung, die eine Art Anschlußmodul ist, bei weiterer vorteilhafter Ausgestaltung der Erfindung dadurch, daß der Koppelkondensator, die Sicherung und die Anpaßeinrichtung einen gemeinsamen zylindrischen Körper mit etwa gleichem Außendurchmesser bilden.

Weitere Vorteile, Merkmale und Anwendungsmöglichkeiten der vorliegenden Erfindung ergeben sich aus der folgenden Beschreibung in Verbindung mit den anliegenden Zeichnungen. In diesen bedeuten:
- Figur 1: den Längsquerschnitt durch einen elektrischen T-Stecker gemäß der Erfindung, wobei Teile abgebrochen sind,
- Figur 2: eine ähnliche Ansicht wie Figur 1, jedoch eine zweite Ausführungsform des T-Steckers, bei welcher die Sicherung auf der Erdseite des Koppelkondensators angeschlossen ist,
- Figur 3: den T-Stecker der Figur 2 bei einer Anwendung unter Anstecken an ein Kabelsteckteil und
- Figur 4: ein anderes Anwendungsbeispiel eines T-Steckers gemäß Figur 2, der an einen Über-spannungsleiter angesteckt ist, welcher seinerseits am Kabelsteckteil angesteckt ist.

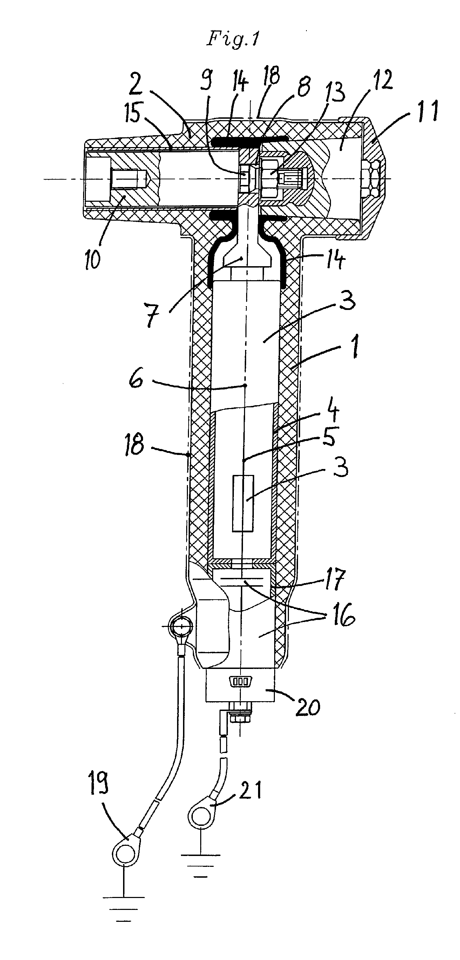

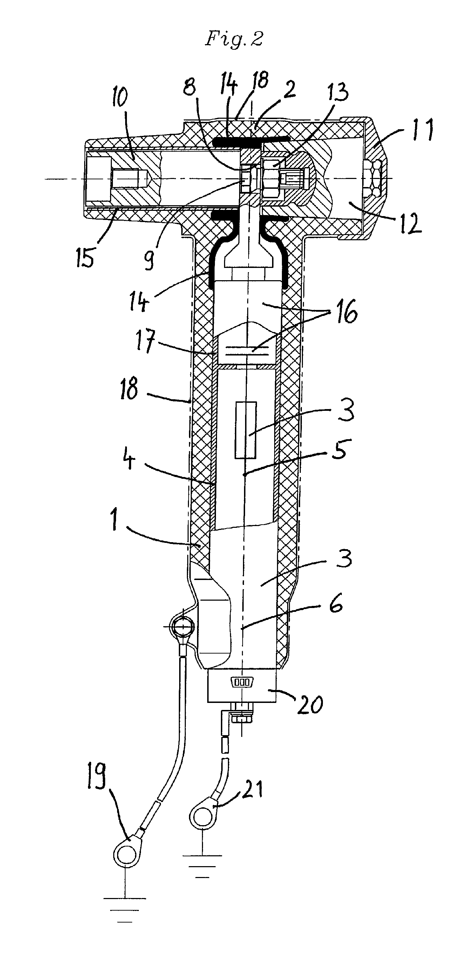

Der in Figur 1 dargestellte elektrische T-Stecker der ersten Ausführungsform besteht aus einem elektrisch isolierenden Steckerkörper 1, an welchen oben ein quergehender Teil 2 einstückig angeformt ist, Teil des isolierenden Steckerkörpers 1 darstellt und aus isolierendem Material hergestellt ist. In dem zylinderförmigen und rohrförmigen Hauptteil des Steckerkörpers 1 ist eine Sicherung 3 untergebracht. Diese ist in Figur 1 oben und in den Figuren 2 bis 4 unten als geometrisch zylindrischer Körper und in dem abgebrochenen und geschnittenen Teil (Figur 1 unten und Figuren 2 bis 4 oben) mit dem elektrischen Symbol der Sicherung 3 dargestellt. Die Sicherung 3 ist außen von dem Sicherungsrohr 4 umgeben. Die wenigstens teilweise als Schmelzleiter ausgebildete Verbindungsleitung 5 verläuft in den zeichnerischen Darstellungen hier entlang der im übrigen strichpunktiert dargestellten Längsmittellinie 6. Die Sicherung 3 weist bei der Darstellung der Figur 1 oben an ihrem Ende einen Anschlußbolzen 7 auf.

Der Anschlußbolzen 7 erstreckt sich längs der Längsmittellinie 6 in den Darstellungen hier nach oben in den quergehenden Teil 2 hinein, etwa mittig. Der Anschlußbolzen 7 weist in seiner Mitte eine Bohrung 8 auf. Durch diese wird quer ein Steckerstift 9 gesteckt, gegebenenfalls auch verschraubt, und ist in einer Steckerbuchse 10 aufgenommen. Rückwärtig, d.h. in den Figuren rechts, ist der quergehende Teil 2 durch eine leitfähige Deckkappe 11 verschlossen. Sie sitzt über einem isolierenden Verschlußstopfen 12. In diesem ist mittig eine Gegenmutter 13 aufgenommen, welche der Befestigung des Steckerstiftes 9 dient.

Über dem Anschlußbolzen und in elektrischer Berührung mit diesem ist innerhalb des quergehenden Teils 2 des Steckerkörpers 1 eine obere Elektrode 14 auf der inneren Oberfläche des Steckerkörpers 1 und seines quergehenden Teils 2 angebracht. Sie liegt rückwärtig, in den Figuren also rechts von dem Anschlußbolzen 7 auf der konusförmigen Oberfläche des isolierenden Verschlußstopfens 12 und links auf einem Stützrohr 15 auf. Letzteres deckt die Steckerbuchse 10, die auch als Steckerbolzen ausgebildet sein kann, ab.

An den unteren, kurzen rohrförmigen Teil der oberen Elektrode 14 schließt sich im Falle des Winkel- bzw. T-Steckers ein teilweise konusförmiges, quergehendes Rohrteil der oberen Elektrode an. Damit übergreift die obere Elektrode 14 den oberen Anschlußbolzen 7, das Stützrohr 15 und damit die Steckerbuchse 10 auf der einen Seite sowie den isolierenden Verschlußstopfen 12 rechts auf der rückwärtigen Seite.

In dem rohrförmigen, zylindrischen Steckerkörper 1 befindet sich nicht nur die Sicherung 3, sondern in Reihe zu dieser ist elektrisch ein Koppelkondensator 16 geschaltet. Man erkennt, daß der Koppelkondensator 16 zylindrische Bauform hat, so daß sein Gehäuse 17 ebenfalls zylindrische Bauform hat und gemeinsam mit der Sicherung einen zylindrischen Körper mit etwa gleichem Außendurchmesser derart bildet, daß beide geometrisch axial hintereinander angeordnete und elektrisch in Reihe geschaltete Bauelemente, nämlich die Sicherung 3 und der Koppelkondensator 16, bündig in den Hohlraum des Steckerkörpers 1 passen.

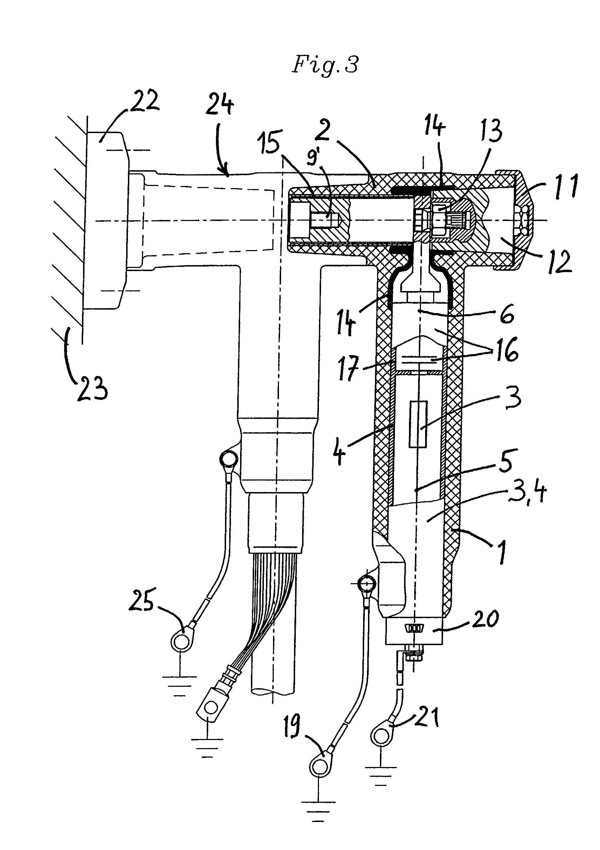

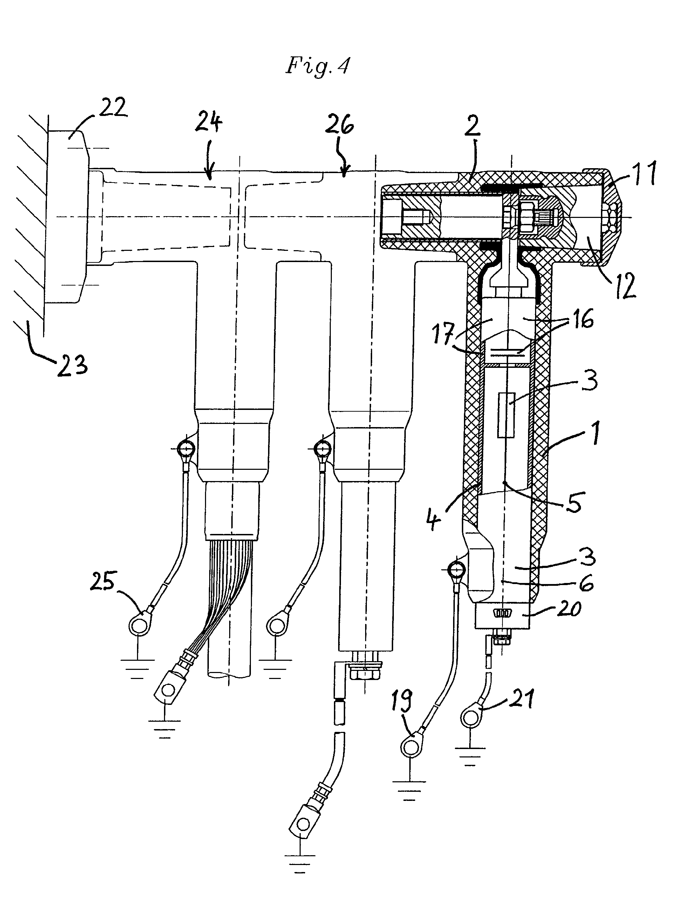

Auf der äußeren Fläche des isolierenden Steckerkörpers 1, einschließlich des quergehenden Teils 2 desselben, ist eine leitfähige Beschichtung 18 aufgelegt. Diese ist in den Figuren 1 und 2 als strichpunktierte Linie wiedergegeben. Es versteht sich, daß auch die anderen Ausführungsformen nach den Figuren 3 und 4 außen ähnlich beschichtet sind, zum Beispiel mit einer metallischen Umhüllung. Die metallische Umhüllung bzw. die allgemein mit 18 bezeichnete leitfähige Beschichtung ist an eine Erdanbindung 19 angeschlossen, so daß ein hervorragender Personenschutz gegeben ist, weil sich der gesamte T-Stecker außen auf Erdpotential befindet.

Man erkennt aus den Figuren deutlich, daß der isolierende Steckerkörper 1 mit seiner außen aufgelegten leitfähigen Beschichtung 18 sowohl die Sicherung 3 als auch den in Reihe nachgeschalteten Koppelkondensator 16 vollständig abdeckt.

In axial weiterer Verlängerung nach außen und unten erstreckt sich eine zylinderförmige Anpaßeinrichtung 20, die ebenfalls mit einer Erdungsanbindung 21 versehen ist. Man erkennt weiterhin, daß sowohl der Koppelkondensator 16 als auch die Sicherung 3 und zusammen mit diesen die Anpaßeinrichtung 20 gemeinsam einen zylindrischen Körper mit etwa gleichem Außendurchmesser bilden.

Hochfrequente Datenströme können über den Steckerstift oben in dem quergehenden Teil 2 des Steckerkörpers 1 aufgenommen und über die Sicherung 3 über den Koppelkondensator 16 (Figur 1) zu der Anpaßeinrichtung 20 geführt werden. Bei der zweiten Ausführungsform der Figur 2 werden die hochfrequenten Datenströme ebenfalls von oben aus dem Anschlußbolzen 7 nach unten über die entsprechende Verbindungsleitung abgeführt, bei der zweiten Ausführungsform allerdings zuerst über den Koppelkondensator 16 und danach über die Sicherung 3 zu der Anpaßeinrichtung 20.

Der elektrische Aufbau der Anpaßeinrichtung 20 ist hier nicht näher dargestellt. Er wurde oben bereits beschrieben.

Durch diese Stromführung hochfrequenter Datenströme mit Hilfe des T-Steckers nach den Figuren 1 oder 2 läßt sich gemäß Darstellung der Figur 3 ein HF-Signal von einem nicht dargestellten Innenkonus in einem Durchführungsgehäuse 22 nach rechts über den Steckerstift 9' auf den Anschlußbolzen 7 herauskoppeln und in der beschriebenen Weise abführen. Das Durchführungsgehäuse 22 ist auf der Wand 23 eines Anlagengehäuses befestigt. Bei dem Anwendungsbeispiel der Figur 3 ist der erfindungsgemäße T-Stecker (oder Winkelstecker) als HF-Ankoppeleinheit an den rückwärtigen Anschluß eines Kabelsteckteils 24 aufgesteckt. Während eine äußere, leitfähige Umhüllung dieses Kabelsteckteils 24 ebenfalls bei 25 geerdet ist (Erdanbindung 25), befindet sich in dem Kabelsteckteil 24 keine Sicherung. Es wird dort nur Energie nach unten abgeleitet, zum Beispiel mit 50 Hz. Die hochfrequenten Ströme können mit diesem Kabelsteckteil 24 nicht abgeleitet werden, wohl aber mit dem rechts dahinter dargestellten T-Stecker gemäß der Erfindung mit der Reihenschaltung.

Bei diesem Anwendungsfall der Figur 3 können also nicht nur die Energie (über das Kabelsteckteil 24), sondern auch hochfrequente Signale über den hinteren rechten T-Stecker aus der Schaltanlage ausgekoppelt bzw. in diese eingekoppelt werden.

Bei einem weiteren anderen Ausführungsbeispiel gemäß Figur 4 erkennt man drei Winkelstekker, nämlich links in das Durchführungsgehäuse 22 eingesteckt das Kabelsteckteil 24. In dessen rückwärtige Öffnung ist nun nicht der T-Stecker gemäß der Erfindung zum Ableiten der hochfrequenten Daten eingesteckt, sondern ein zusätzlicher T-Stecker 26, der einen Überspannungsableiter (nicht dargestellt) enthält. Erst auf dessen rückseitiger Öffnung ist der T-Stecker gemäß der Erfindung aufgesteckt. Die Reihenfolge der Stecker ist dabei beliebig. So kann man zum Beispiel den zusätzlichen T-Stecker 26 mit dem Überspannungsableiter geometrisch mit dem T-Stecker gemäß der Erfindung mit der HF-Ankoppeleinheit vertauschen, so daß die HF-Ankoppeleinheit in der Mitte und der Überspannungsableiter geometrisch rechts außen zu liegen kommen.

### Bezugszeichenliste:

- 1: Steckerkörper
- 2: quergehender Teil des Steckerkörpers
- 3: Sicherung
- 4: Sicherungsrohr
- 5: Verbindungsleitung
- 6: Längsmittellinie
- 7: Anschlußbolzen
- 8: Bohrung im Anschlußbolzen
- 9, 9': Steckerstift
- 10: Steckerbuchse
- 11: Abdeckkappe
- 12: isolierender Verschlußstopfen
- 13: Gegenmutter
- 14: obere Elektrode
- 15: Stützrohr
- 16: Koppelkondensator
- 17: Gehäuse des Koppelkondensators
- 18: leitfähige Beschichtung
- 19: Erdanbindung
- 20: Anpaßeinrichtung
- 21: Erdungsanbildung der Anpaßeinrichtung
- 22: Durchführungsgehäuse
- 23: Wand eines Anlagengehäuses
- 24: Kabelsteckteil
- 25: Erdanbindung
- 26: zusätzlicher T-Stecker

## Patentansprüche

1. Elektrischer T-Stecker für den Anschluß an Hochspannungsleitungen, insbesondere in Schaltanlagen, wobei in einem elektrisch isolierenden Steckerkörper (1), von diesem überdeckt, eine Sicherung (3) angeordnet ist, **dadurch gekennzeichnet, daß** in Reihe zu der Sicherung (3) ein Koppelkondensator (16) geschaltet ist, der ebenfalls von dem isolierenden Steckerkörper (1) überdeckt ist.

2. T-Stecker nach Anspruch 1, **dadurch gekennzeichnet, daß** der Koppelkondensator (16) ein keramischer Scheibenkondensator ist.

3. T-Stecker nach Anspruch 1 oder 2, **dadurch gekennzeichnet, daß** der Koppelkondensator (16) zylindrische Bauform hat.

4. T-Stecker nach einem der Ansprüche 1 bis 3, **dadurch gekennzeichnet, daß** auf der äußeren Fläche des isolierenden Steckerkörpers (1) eine leitfähige Beschichtung (18) vorgesehen ist.

5. T-Stecker nach einem der Ansprüche 1 bis 4, **dadurch gekennzeichnet, daß** in Reihe zu der Sicherung (3) und dem Koppelkondensator (16) eine Anpaßeinrichtung (20) geschaltet ist.

6. T-Stecker nach einem der Ansprüche 1 bis 5, **dadurch gekennzeichnet, daß** in der Reihenschaltung die Sicherung (3) auf der Erdseite des Koppelkondensators (16) angeschlossen ist.

7. T-Stecker nach einem der Ansprüche 1 bis 6, **dadurch gekennzeichnet, daß** der Koppelkondensator (16) und die Sicherung (3) einen gemeinsamen zylinderförmigen Körper mit etwa gleichem Außendurchmesser bilden.

8. T-Stecker nach einem der Ansprüche1 bis 7, **dadurch gekennzeichnet, daß** der Kondensator (16), die Sicherung (3) und die Anpaßeinrichtung (20) einen gemeinsamen zylinderförmigen Körper mit etwa gleichem Außendurchmesser bilden.
